# EUROPÄISCHE PATENTSCHRIFT

(11) **EP 1 800 969 B1**
(45) Veröffentlichungstag und Bekanntmachung des Hinweises auf die Patenterteilung: **30.09.2009**
(21) Anmeldenummer: 06025411.7
(22) Anmeldetag: 08.12.2006
(51) Int. Cl.: B60R 21/20, F16B 5/06, B60R 21/217, B60R 21/205

(54) **Airbagmodul mit mindestens einem Befestigungselement**
Airbag module with at least one mounting element
Module d'airbag ayant au moins un élément de fixation

(30) Priorität: 20.12.2005 DE 102005060892
(43) Veröffentlichungstag der Anmeldung: 27.06.2007
(73) Patentinhaber: GM Global Technology Operations, Inc., Detroit, MI 48265-3000 (US)
(72) Erfinder: Rick, Ulrich, 55595 Roxheim (DE)
(74) Vertreter: Strauss, Peter

(56) Entgegenhaltungen:
- EP-A- 1 101 661
- EP-A- 1 481 855
- WO-A-03/033311
- DE-A1- 19 715 032
- JP-A- 5 185 891

## Beschreibung

Die Erfindung betrifft ein Airbagmodul mit mindestens einem Befestigungselement zur Befestigung an einem Fahrzeugstrukturelement gemäß Oberbegriff des Patentanspruches 1.

Aus der europäischen Patentschrift EP 0 771 696 B1 sind Mittel zur Befestigung eines Airbagmoduls für Fahrzeuge bekannt. Hierbei besteht das Airbagmodul aus einem Gehäuse, innerhalb dem der Airbag sowie Zündelemente etc. angeordnet sind. Das Airbagmodulgehäuse ist eine zusammenhängende Baueinheit, die bei der Montage des Fahrzeuges an die gewünschte Stelle platziert wird. Dabei stützt sich das Airbagmodul an der der Entfaltungsebene gegenüberliegenden Rückseite an mindestens einer Fahrzeugstruktur oder einem Fahrzeugstrukturelement ab. Dies können Querträger oder ähnliches sein, die direkt und kraftschlüssig mit der Fahrzeugrahmenstruktur bzw. der Fahrzeugträgerstruktur verbunden sind. So findet das Airbagmodulgehäuse diesbezüglich eine Abstützung an der festen Fahrzeugstruktur selbst.

Aus der genannten europäischen Patentschrift sind zur Fixierung des Airbagmoduls spezielle Rastelemente vorgesehen, die jedoch im Kern Bolzen enthalten, die zusätzlich zu der Verrastung das Airbagmodul an der Fahrzeugstruktur fixieren.

Aus den Schriften DE 43 38 666.0 sowie DE 103 12 947.2 sind ebenfalls Airbagmodule bekannt, bei denen die Befestigung derselben an der Fahrzeugstruktur in ähnlicher Weise, wie oben bereits ausgeführt, vorgenommen wird. Hierbei sind Befestigungselemente mit verschiedenen Befestigungstechniken gewählt. So zeigen diese bekannten Anordnungen, dass Rastzapfen zwar eingehängt und verwendet werden, jedoch zusätzliche Schrauben den Verbund fixieren.

Es hat sich gezeigt, dass eine solche aufwändige Verbindung befestigungs- oder fixierungsbezogen überbestimmt ist und die Lagestabilität des Airbagmodulgehäuses durch Verwendung weiterer und zusätzlicher Fixierungselemente in seiner Funktion nicht verbessert wird.

Schraubverbindungen stellen jedoch in der Fertigungstechnik kritische Punkte dar. Diese sind aufwändig in der Montage und behindern den Produktionsablauf unnötig, obwohl aus den zusätzlichen Schraubverbindungen keine sicherheitsrelevanten Funktionen ableitbar sind. Dabei ist nämlich zu beachten, dass die Airbagmodule sich mit der Rückseite an der Fahrzeugrahmenstruktur abstützen und aus diesem Grund schon aufgrund der auftretenden Kräfte im Crashfall sich noch fester an diese Fahrzeugstruktur anpressen und somit im bestimmungsgemäßen Gebrauchfall lagestabil und damit lagegesichert sind.

Schraubverbindungen haben außerdem den Nachteil, dass sie in der Fertigung beim Verschrauben Gewindeteile beschädigen können. Da die Querträgerstrukturen im Fahrzeugrahmen vielfach aus modernen Leichtmetallen, wie Magnesium, gefertigt sind, sind Nachbearbeitung ausgerissener oder beschädigter Gewindeelemente erheblich aufwändig. Dieser Aufwand ist besonders deshalb nicht gerechtfertigt, weil die Lagestabilität des Airbagmoduls durch Schraubelemente nicht erhöht wird.

Aus der WO 03/033311 A1 ist ein Airbagmodul nach dem Oberbegriff des Anspruchs 1 bekannt, bei dem zwei Befestigungshaken auf desselben topographischen Ebene angeordnet sind.

Aufgabe der Erfindung ist es daher, eine Airbagmodulbefestigung zu schaffen, die ebenso sicher und lagestabil ist, wie aus dem Stand der Technik vorbekannt, aber die oben beschriebenen, eingangs erwähnten fertigungstechnischen Nachteile beseitigt.

Die gestellte Aufgabe wird bei einem Airbagmodul der gattungsgemäßen Art erfindungsgemäß durch die kennzeichnenden Merkmale des Patentanspruches 1 gelöst.

Weitere vorteilhafte Ausgestaltungen der Erfindung sind in den abhängigen Ansprüchen angegeben.

Funktional besteht die Erfindung darin, dass das Befestigungselement bzw. die Befestigungselemente ausschließlich aus Steck-Rast-Elementen bestehen und integraler Bestandteil des Airbagmodulgehäuses sind.

Hierbei kommt es auf die Kombination der beiden genannten technischen und funktionalen Merkmale an. Zum einen bestehen die Befestigungselemente nur noch ausschließlich aus Steck-Rast-Elementen, d. h. auf Schraubelemente wird gegenüber dem eingangs erwähnten Stand der Technik gänzlich verzichtet.

Damit kombiniert wird des Weiteren das Merkmal, dass die Steck-Rast-Elemente integraler Bestandteil des Airbagmodulgehäuses sind. Dies bedeutet, dass die entsprechenden dornartigen Fortsätze mit der entsprechenden Verrastungstopographie direkt am Modulgehäuse angeformt sind. Das heißt, es müssen keine separaten Befestigungselemente mehr an das Airbagmodulgehäuse angebracht bzw. montiert werden, sondern die fertige Baueinheit kann, so wie sie gestaltet ist, direkt auf die entsprechenden Öffnungen in den Fahrzeugstrukturelementen aufgesteckt und verrastet werden.

Das Airbagmodul ist samt seiner Befestigungselemente damit eine einstückige Baueinheit, die leicht und zuverlässig montiert werden kann.

Die Fertigung, d. h. die Montage der Airbags wird damit erheblich vereinfacht. Diese Technologie betrifft zum einen natürlich die üblichen Airbags für den Beifahrer, die direkt an der Fahrzeugrahmenstruktur, d. h. an den Querträgern befestigt sind, jedoch kann diese Technologie auch für Airbags bzw. Airbagmodule verwendet werden, die an der Seitenstruktur oder auch im Lenkrad eingebaut werden.

Durch die entsprechende Form der Fahrzeugstrukturelemente und der Außenkontur der Rückseite des Airbagmodulgehäuses sind diese in gleicher Weise lagestabil. Die Rastelemente halten den Airbag bzw. das Airbagmodulgehäuse dann nur noch in der entsprechenden Position.

In weiterer vorteilhafter Ausgestaltung ist angegeben, dass mindestens zwei Steck-Rast-Elemente an der Rückseite des Airbagmodulgehäuses angeordnet sind. Bei der Verwendung von mindestens zwei Steck-Rast-Elementen ist noch keine überbestimmte Lagerung, wie beispielsweise bei vier Steck-Rast-Elementen gegeben, aber durch die Verwendung von mindestens zwei Steck-Rastelementen wird eine optimale Lagepositionierung erreicht.

Wie oben bereits angedeutet, ist in weiterer vorteilhafter Ausgestaltung angegeben, dass die Steck-Rast-Elemente in komplementäre Öffnungen oder Ringelemente der Fahrzeugrahmenstruktur bzw. des entsprechenden Fahrzeugrahmenstrukturelementes eingreifen. Hierzu können die Öffnungen direkt in dem Fahrzeugrahmenstrukturelement implementiert sein oder aber als eingepresste oder eingebrachte Ringelemente.

Erfindungsgemäß sind mindestens zwei Steck-Rast-Elemente auf verschiedenen topographischen Ebenen des Airbagmodulsgehäuses bzw. dessen Rückseite angeordnet.

Auf verschiedenen topographischen Ebenen bedeutet, dass die beiden Steck-Rast-Elemente nicht auf gleicher Höhe zueinander platziert sind, sondern, wie oben bereits ausgeführt, ist die Rückseite des Airbagmodulgehäuses ja konturiert, um eine optimale und sichere Lagestabilität an der Fahrzeugrahmenstruktur zu haben. Diese Topografie wird damit komplementär nachgezeichnet d.h. nachgebildet, damit sich der Airbag dort anschmiegt.

Demzufolge ist es vorteilhaft, wenn bei Verwendung von zwei Steck-Rast-Elementen diese auf unterschiedlichen topografischen Ebenen liegen. Damit wird erreicht, dass bei einer konturierten Rückseite das Airbagmodulgehäuses eine zusätzliche Lagestabilisierung und Fixierung auf jeweils jeder topographischen Ebene der dortigen Fahrzeugrahmenstruktur vorgenommen werden kann. Das Airbagmodulgehäuse sitzt dadurch sehr sicher in der Fahrzeugrahmenstruktur an.

In weiterer vorteilhafter Ausgestaltung ist angegeben, dass ein zusätzlicher Führungsstift am Airbagmodulgehäuse angeformt ist, der in eine entsprechend komplementäre Öffnung an dem Fahrzeugstrukturelement einführbar ist. Dieser zusätzliche Führungsstift ist kein Schraubelement, wie im Stand der Technik, sondern lediglich ein glatt konturierter Führungsstift, der lediglich eine Seitenversatzverhinderung sowie einen Verdrehschutz herbeiführt, jedoch keine in axialer Zug- oder Druckrichtung bewirkte Lagepositionierung bewirkt. Die Führungsstifte dienen einzig dem Zweck, die Montage dadurch zu erleichtern. So können beispielsweise seitliche Führungsstifte angeordnet sein, die der Monteur in der Fahrzeugfertigung fühlen, ertasten und sogar sehen kann und die er dann in vorbestimmte Öffnungen der Fahrzeugstrukturelemente einführt, währenddem die Rastelemente erst entlang des dann vollzogenen Einschubweges später eingreifen und hörbar verrasten.

Zusätzlich kann der Führungsstift aber auch als Verdrehschutz dienen, wenn beispielsweise nur ein Steck-Rastelement verwendet wird.

In weiterer vorteilhafter Ausgestaltung ist angegeben, dass die Steck-Rast-Elemente an der der Airbagexpansionsseite gegenüberliegenden Seite, nämlich der Rückseite, angeordnet sind. Die funktionalen Vorteile sind bereits oben ausgeführt.

In weiterer vorteilhafter Ausgestaltung ist angegeben, dass die Befestigungselemente gleichsinnig parallel orientiert sind, dass die Montage in einem Befestigungshub vollzogen werden kann.

In weiterer vorteilhafter Ausgestaltung ist angegeben, dass zusätzlich die Steck-Rast-Elemente durch eine Art Wellensicherung in der Öffnung der Fahrzeugrahmenstruktur gesichert werden können, falls dies vonnöten ist. Weiterhin können auch Dämpfungsbuchsen in die Fahrzeugrahmenstruktur eingelegt werden oder im Bereich derselben angeordnet sein.

In weiterer vorteilhafter Ausgestaltung ist angegeben, dass die Steck-Rast-Elemente so ausgestaltet sind, dass nach Erreichen der Montageendlage, die letzte Rastanformung in axialer Richtung gerade passiert wurde. Damit ist gemeint, dass die Steck-Rast-Elemente nicht beliebig viele ringförmige Anformungen haben sollten, sondern dass sich die Endlage dadurch kennzeichnet, dass beim Einschieben in die Montageendlage gerade die letzte Rastanformung passiert wurde. Das dabei entstehende Klick-Geräusch ist dann für den Monteur das akustische Signal dafür, dass das Airbagmodul nunmehr in Soll-Lage erfolgreich positioniert und befestigt wurde.

In weiterer vorteilhafter Ausgestaltung ist vorgesehen, dass die Rückseite des Airbagmodulgehäuses auf dem auch die Befestigungselemente angeformt sind, so ausgestaltet ist, dass sich eine teilformschlüssige Anlage des Airbagmoduls auf dem oder den Fahrzeugstrukturelement bzw. -elementen ergibt. Diese Funktion wurde oben bereits dargelegt.

Die Erfindung ist in Ausgestaltungsbeispielen in der Zeichnung dargestellt und nachfolgend näher beschrieben. Es zeigt:
- Figur 1:: Seitenansicht des Airbagmodulgehäuses mit einem Teilausschnitt eines Querträgers oder Fahrzeugstrukturelementes im Querschnitt,
- Figur 2:: Zusätzliche Lagesicherung,
- Figur 3:: Verwendung eines Dämpfungselementes,
- Figur 4:: Verwendung einer Rillenkontur für den Direkteingriff an der Fahrzeugstruktur.

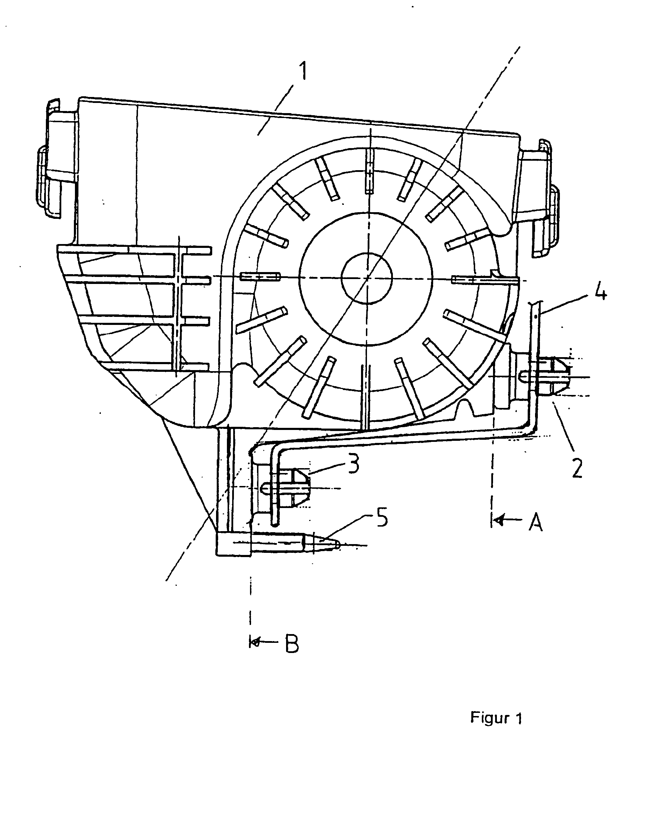

Figur 1 zeigt in einer Seitendarstellung den Airbag bzw. das Airbagmodulgehäuse 1 in seiner Montageendlage. Ebenfalls ist zu erkennen, der Querschnitt eines Querträgers 4, welcher das Fahrzeugstrukturelement darstellt, an dem das Airbagmodulgehäuse 1 befestigt ist. Dieses Strukturelement ist ein Querträger, der quer zu den Seitenlinien der Gesamtfahrzeugstruktur verläuft.

Das Strukturelement kann aber auch im Seitenbereich der Fahrzeuggesamtstruktur lokalisiert sein.

Hierbei ist zu erkennen, dass auf der der Entfaltungsrichtung entgegengesetzten Seite, d. h. auf der Rückseite des Airbagmodulgehäuses 1, die beiden Befestigungselemente 2, 3 platziert sind.

Hierbei ist auch zu erkennen, wie oben beschrieben, dass sich die beiden Befestigungselemente 2, 3 hier Steck-Rast-Elemente, auf verschiedenen topographischen Ebenen A, B befinden. Das heißt, das obere Befestigungselement reicht weiter nach hinten, als das untere Befestigungselement. Damit wird in allen kraftschlüssigen und teilformschlussbildenden Anlagebereichen des Airbagmoduls 1 an der Fahrzeugrahmenstruktur 4 jeweils ein Befestigungselement 2 bzw. 3 platziert.

Ferner ist in dieser Darstellung zu erkennen, dass im unteren Bereich ein Führungsstift 5 an das Airbagmodulgehäuse 1 angeformt ist, welcher in eine Fahrzeugrahmenstruktur 4 oder eine Öffnung oder eine Führung eingreifen kann. Diese kann von außen besser vom Monteur gesehen werden, als die Befestigungselemente selbst, und geben somit eine Positionierung in Aufschiebrichtung vor, so dass die Befestigungselemente tatsächlich die bestimmungsgemäßen Öffnungen in der Fahrzeugrahmenstruktur finden. Dabei kann dieser Führungsstift auch als Verdrehschutz dienen, wenn nur ein Steck-Rastelement vorgesehen ist.

Hierbei ist auch zu erkennen, dass die Befestigungselemente 2, 3 direkt an das Airbagmodulgehäuse 1 angeformt sind und nicht somit noch mehrteilige Elemente zur Befestigung darstellen.

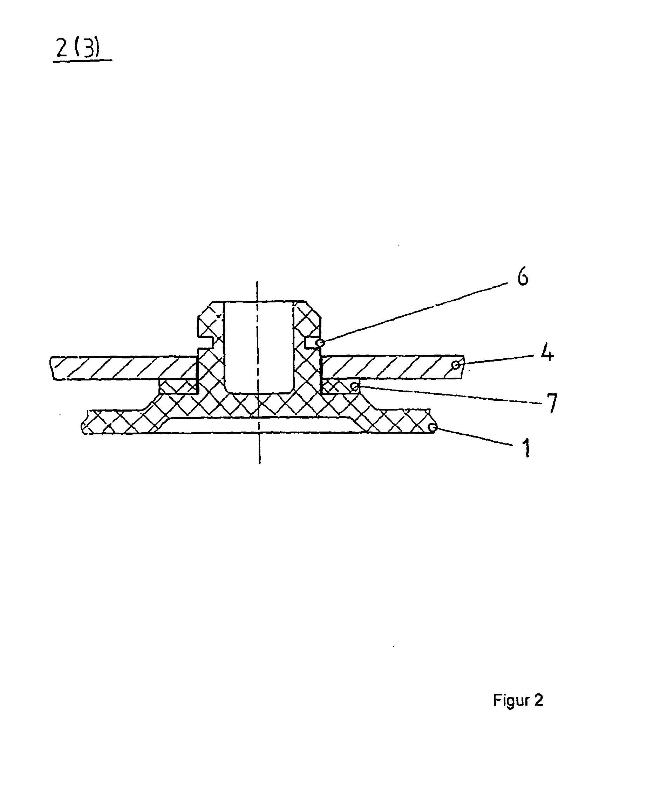

Figur 2 zeigt die Verwendung einer Art Wellensicherung, bei der das Steck-Rast-Element 2 bzw. 3 auf der durch die Öffnung der Fahrzeugrahmenstruktur hindurchgeführten Rückseite eine Rille 6 enthält, in die Federclipse, hier nicht weiter dargestellt, oder Sicherungsringe, eingeklickt werden können. Weiterhin können Dämpfungselemente 7 verwendet werden, in Form von Ringen oder Buchsen, die dann die Lage des Airbaggehäuses mit dem Steck-Rastelement in der Öffnung der Fahrzeugrahmenstruktur dämpfend bzw. lagegedämpft befestigen.

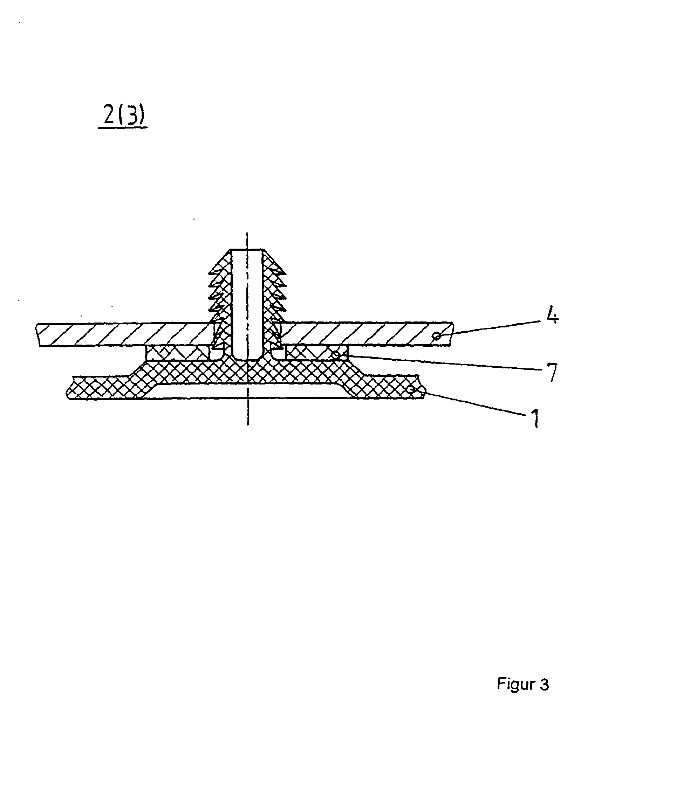

Figur 3 zeigt im Querschnitt ein Befestigungselement 2, 3 bei dem die Außenkontur mit Rillen, in diesem Falle mit hinterschnittenen Rillen versehen ist, die sodann in die Öffnung bzw. in die komplementäre Konturen der Öffnung der Fahrzeugrahmenstruktur 4 eingreifen und dort zur Lagesicherung führen.

Hier kann das Einklicken bzw. das letztmalige Klick- oder Rastgeräusch als Endlagenpositionierung erkannt werden.

Auch hierbei kann zusätzlich ein Dämpfungselement verwendet werden.

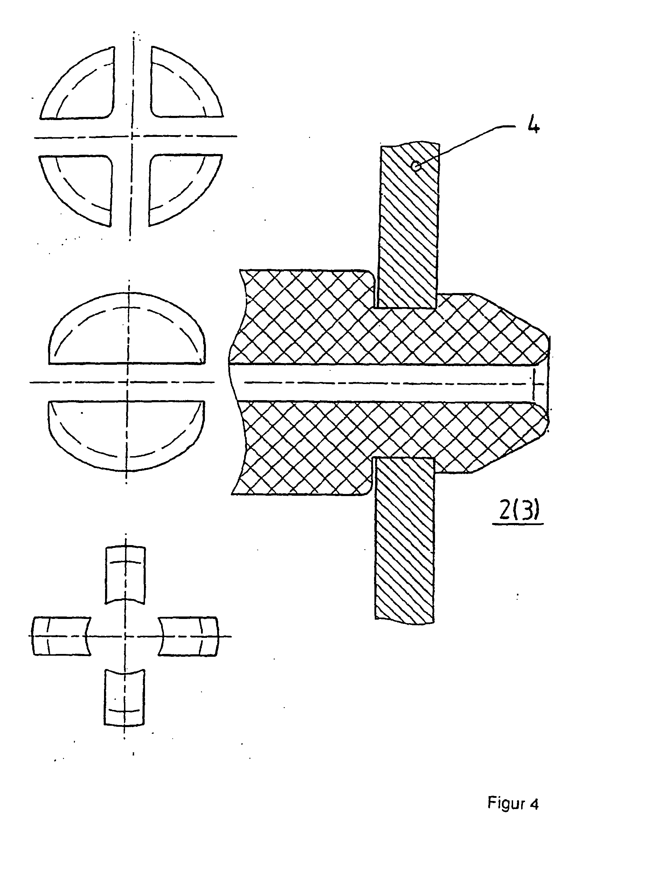

Figur 4 zeigt eine Detailansicht eines Steck-Rast-Elementes 2 bzw. 3, bei dem nur eine einzige komplementäre Rillenkontur vorgesehen ist, in die der Rand der Öffnung des Fahrzeugstrukturelementes 4 in der Solllage aufgenommen wird.

Damit das verdickte Ende des Steck-Rast-Elementes 2, 3 welches im Durchmesser größer ist als die Öffnung in der Fahrzeugrahmenstruktur 4 auch dort platziert werden kann, ist der entsprechende Zapfen des Befestigungselementes bzw. das Steck-Rast-Element 2, bzw. 3 entweder zweigeteilt in zwei im Querschnitt dargestellte Teile, die wie Zungen aufeinander zubewegt werden können und sich dann wieder federnd abspreizen, wenn die Solllage erreicht ist, oder aber es können auch mehrteilige Elemente sein, wie dies die Darstellungen der Querschnittskonturen des Steck-Rast-Elementes im linken Bildteil von Figur 4 zeigen.

Insgesamt ergeben sich eine Reihe von Vorteilen. Ein erster ist, dass die bisherigen oben genannten zusätzlichen Schrauben völlig entfallen können. Ebenso entfallen entsprechende vorgefertigte Gewindebuchsen und Querträger. Auch zusätzliche Stahlgewindebuchsen im Kunststoffgehäuse können durch die einstückige Anformung der Steck-Rast-Elemente ebenso entfallen. Ebenso entfallen können zusätzliche Montagewerkzeuge wie Schrauber etc. Damit wird die Montagezeit erheblich verkürzt, ein reduzierter Prüfaufwand geschaffen und teure Nacharbeiten völlig vermieden.

### Bezugszeichenliste

1. Airbagmodulgehäuse
2. Befestigungselement / Steck-Rast-Element
3. Befestigungselement / Steck-Rast-Element
4. Fahrzeugrahmenstruktur
5. Führungsstift
6. Rille
7. Dämpfungselement

A. topografische Ebene
B. topografische Ebene

## Patentansprüche

1. Airbagmodul mit mindestens zwei Befestigungselementen zur Befestigung an einem Fahrzeugstrukturelement, wobei die Befestigungselemente ausschließlich aus Steck-Rast-Elementen (2, 3) bestehen und integraler Bestandteil des Airbagmodulgehäuses (1) ist bzw. sind, **dadurch gekennzeichnet, dass** die mindestens zwei Steck-Rast-Elemente (2, 3) auf ver- schiedene topographische Ebenen (A, B) des Airbag- modulgehäuses (1) angeordnet sind.

2. Airbagmodul nach Anspruch 1, **dadurch gekennzeichnet, dass** die Steck-Rast-Elemente (2, 3) in komplementäre Öffnungen oder Ringelemente der Fahrzeugstrukturelemente (4) eingreifen.

3. Airbagmodul nach Anspruch 1 oder 2, **dadurch gekennzeichnet, dass** ein zusätzlicher Führungsstift (5) am Airbagmodulgehäuse (1) angeformt ist, der in eine entsprechend komplementäre Öffnung an dem Fahrzeugstrukturelement (4) einführbar ist.

4. Airbagmodul nach einem der vorhergehenden Ansprüche, **dadurch gekennzeichnet, dass** die Steck-Rast-Elemente (2, 3) an der der Airbagexpansionsseite gegenüberliegenden Seite des Airbagmodulgehäuses (1) angeordnet sind.

5. Airbagmodul nach einem der vorhergehenden Ansprüche, **dadurch gekennzeichnet, dass** die Steck-Rast-Elemente (2, 3) gleichsinnig parallel orientiert angeordnet sind.

6. Airbagmodul nach einem der vorhergehenden Anspruche, **dadurch gekennzeichnet, dass** an der Rückseite eines bestimmungsgemäß positionierten Steck-Rast-Elementes (2) bzw. (3) eine Wellensicherung platziert ist.

7. Airbagmodul nach einem der vorhergehenden Ansprüche, **dadurch gekennzeichnet, dass** Dämpfungselemente (7) als Ringscheiben oder Buchsen im Bereich der bestimmungsgemäß platzierten Steck-Rast-Elemente (2, 3) angeordnet sind.

8. Airbagmodul nach einem der vorhergehenden Ansprüche, **dadurch gekennzeichnet, dass** die Steck-Rast-Elemente (2, 3) mit rastenden Anformungen so ausgebildet sind, dass nach Erreichen einer Montageendlage die letzte Rastanformung gerade passiert wurde.

9. Airbagmodul nach einem der vorhergehenden Ansprüche, **dadurch gekennzeichnet, dass** die Rückseite des Airbagmodulgehäuses (1) auf dem auch die Befestigungselemente angeformt sind, so ausgestaltet ist, dass sich eine teilformschlüssige Anlage des Airbagmodulgehäuses (1) auf dem oder den Fahrzeugstrukturelementen (4) ergibt.

## Claims

1. An airbag module with at least two mounting elements for mounting on a vehicle structure element, with the mounting elements consisting exclusively of plug-in latching elements (2, 3) and being an integral component of the airbag module housing (1), **characterized in that** the at least two plug-in latching elements (2, 3) are arranged at different topographical levels (A, B) of the airbag module housing (1).

2. An airbag module according to claim 1, **characterized in that** the plug-in latching elements (2, 3) engage in complementary openings or ring elements of the vehicle structure elements (4).

3. An airbag module according to claim 1 or 2, **characterized in that** an additional guide pin (5) is formed on the airbag module housing (1) which is insertable into a respective complementary opening on the vehicle structure element (4).

4. An airbag module according to one of the preceding claims, **characterized in that** the plug-in latching elements (2, 3) are arranged on the side of the airbag module housing (1) which is opposite of the airbag expansion side.

5. An airbag module according to one of the preceding claims, **characterized in that** the plug-in latching elements (2, 3) are arranged to be oriented in the same direction in parallel.

6. An airbag module according to one of the preceding claims, **characterized in that** a shaft securing means is placed on the rear side of an appropriately positioned plug-in latching element (2) or (3).

7. An airbag module according to one of the preceding claims, **characterized in that** damping elements (7) are arranged as annular disks or bushes in the region of the appropriately placed plug-in latching elements (2, 3).

8. An airbag module according to one of the preceding claims, **characterized in that** the plug-in latching elements (2, 3) are arranged with latching formed parts in such a way that after reaching a final mounting position the last latching formed part was just passed.

9. An airbag module according to one of the preceding claims, **characterized in that** the rear side of the airbag module housing (1), on which the mounting elements are also formed, is arranged in such a way that partial interlocking contact of the airbag module housing (1) is obtained on the vehicle structure elements (4).

## Revendications

1. Module de coussin gonflable de sécurité avec au moins deux éléments de fixation pour la fixation sur un élément structurel de véhicule, dans lequel les éléments de fixation se composent exclusivement d'éléments à emboîtement et encliquetage (2, 3) et font partie intégrante du boîtier du module de coussin gonflable de sécurité (1), **caractérisé en ce que** les au moins deux éléments à emboîtement et encliquetage (2, 3) sont disposés à des niveaux topographiques (A, B) différents du boîtier du module de coussin gonflable de sécurité (1).

2. Module de coussin gonflable de sécurité selon la revendication 1, **caractérisé en ce que** les éléments à emboîtement et encliquetage (2, 3) se mettent en prise dans des ouvertures ou des éléments annulaires complémentaires des éléments structurels du véhicule (4).

3. Module de coussin gonflable de sécurité selon la revendication 1 ou 2, **caractérisé en ce qu'**une goupille de guidage supplémentaire (5) est formée sur le boîtier du module de coussin gonflable de sécurité (1) et peut être introduite dans une ouverture complémentaire correspondante sur l'élément structurel du véhicule (4).

4. Module de coussin gonflable de sécurité selon l'une des revendications précédentes, **caractérisé en ce que** les éléments à emboîtement et encliquetage (2, 3) sont disposés sur le côté du boîtier du module de coussin gonflable de sécurité (1) faisant face au côté d'expansion du coussin gonflable de sécurité.

5. Module de coussin gonflable de sécurité selon l'une des revendications précédentes, **caractérisé en ce que** les éléments à emboîtement et encliquetage (2, 3) sont orientées parallèlement dans le même sens.

6. Module de coussin gonflable de sécurité selon l'une des revendications précédentes, **caractérisé en ce qu'**une sécurité d'axe est placée sur la face arrière d'un élément à emboîtement et encliquetage (2) ou (3) positionné de la manière prévue.

7. Module de coussin gonflable de sécurité selon l'une des revendications précédentes, **caractérisé en ce que** des éléments d'amortissement (7) en forme de rondelles annulaires ou de douilles sont disposés au niveau des éléments à emboîtement et encliquetage (2, 3) disposés de la manière prévue.

8. Module de coussin gonflable de sécurité selon l'une des revendications précédentes, **caractérisé en ce que** les éléments à emboîtement et encliquetage (2, 3) sont munis de saillies d'engagement de telle façon que la dernière saillie d'engagement vient tout juste d'être franchie quand finale de montage est atteinte.

9. Module de coussin gonflable de sécurité selon l'une des revendications précédentes, **caractérisé en ce que** la face arrière du boîtier du module de coussin gonflable de sécurité (1) sur laquelle les éléments de fixation sont formés est conformée de telle manière qu'il se crée un appui en correspondance de forme partielle du boîtier du module de coussin gonflable de sécurité (1) sur le ou les éléments structurels du véhicule (4).
